## Europäisches Patentamt

## European Patent Office

## Office européen des brevets

(11) Numéro de publication: **0 220 090**
**B1**

(12) **FASCICULE DE BREVET EUROPÉEN**

(45) Date de publication du fascicule du brevet:
07.02.90

(21) Numéro de dépôt: 86402012.8

(22) Date de dépôt: 15.09.86

(51) Int. Cl. ⁵: **B 23 K 9/28, H 05 H 1/34**

(54) Equipement de travail à l'arc.

(30) Priorité: 16.09.85 FR 8513675

(43) Date de publication de la demande:
29.04.87 Bulletin 87/18

(45) Mention de la délivrance du brevet:
07.02.90 Bulletin 90/06

(84) Etats contractants désignés:
AT BE CH DE FR GB IT LI LU NL SE

(56) Documents cité:
EP-A-0 079 019
US-A-2 512 707

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**
(84) Etats contractants désignés: **IT SE**

(73) Titulaire: **LA SOUDURE AUTOGENE FRANCAISE**
**75, Quai d'Orsay**
**F-75321 Paris Cedex 07 (FR)**
(84) Etats contractants désignés: **BE CH DE FR GB LI LU NL AT**

(72) Inventeur: **Marhic, Gérard**
**16D, Maradas Verts**
**F-95000 Cergy (FR)**

(74) Mandataire: **Sadones Laurent, Renée**
**L'AIR LIQUIDE 75, quai d'Orsay**
**F-75321 Paris Cédex 07 (FR)**

LIBERGRAF, STOCKHOLM 1990

EP 0 220 090 B1

## Description

La présente invention est relative à un équipement manuel de travail à l'arc, de faible puissance, à allumage par court-circuit, du type comprenant une tête de torche, un générateur de courant électrique et de fluide, et un câble composite adapté pour raccorder la tête de torche au générateur, ce câble composite étant constitué, dans sa partie courante, d'un tuyau flexible dans lequel est disposé un conducteur électrique unique et comportant à chacune de ses extrémités un embout de raccordement de forme cylindrique permettant le passage simultané du courant électrique et du gaz. Elle s'applique en particulier aux équipements de coupage plasma manuels de faible puissance à allumage par court-circuit.

Dans les équipements existants du type précité, le câble composite possède une longueur de l'ordre de 6 mètres, ce qui est insuffisant dans certain cas d'utilisation, par exemple lors de travaux sur échafaudage.

L'invention a pour but de permettre de disposer d'une façon commode de la longueur de câble nécessaire entre la tête de torche et le générateur.

A cet effet, l'invention a pour objet un équipement de travail à l'arc du type précité, caractérisé en que l'embout (16) de l'une des extrémités du câble composite (3) présente une configuration de raccordement identique à celle (4) de la tête de torche, tandis que l'embout (10) de l'autre extrémité du câble présente une configuration de raccordement identique à celle (6) du générateur. Il suffit alors de disposer de plusieurs câbles composites standards, tous identiques, que l'on peut raccorder bout à bout jusqu'à la longueur désirée.

Dans un mode de réalisation particulièrement avantageux, la tête de torche est rectiligne, et l'équipement suivant l'invention comprend en outre un coude destiné à être interposé entre la tête de torche et un câble composite, ce coude présentant à chaque extrémité une configuration de raccordement identique à la configuration de raccordement correspondante du câble composite. On peut ainsi transformer facilement une torche droite en torche coudée, et inversement, suivant le travail à effectuer.

La réalisation de l'invention est extrêmement simple lorsque la tête de torche est une tête de coupage plasma à allumage par court-circuit, du type décrit par exemple dans le brevet EP-A2-144 267; en effet, dans ce cas, le câble composite est constitué simplement, dans sa partie courante, d'un tuyau flexible dans lequel est disposé un conducteur électrique unique; les moyens de raccordement peuvent alors se réduire à une simple liaison, par exemple vissée, entre deux embouts métalliques, avec une position angulaire relative indifférente entre les éléments mis bout à bout.

Un exemple de réalisation de l'invention va maintenant être décrit en regard des dessins annexés, sur lesquels:

- la figure 1 est une vue en élévation, avec coupe partielle, d'un équipement de coupage plasma conforme à l'invention;
- la figure 2 représente le même équipement mais avec utilisation d'un second câble composite à titre de prolongateur;
- la figure 3 illustre l'utilisation d'un coude entre la tête de torche et le câble composite adjacent; et
- la figure 4 représente à plus grande échelle, en coupe longitudinale, l'extrémité amont d'un câble composite du même équipement.

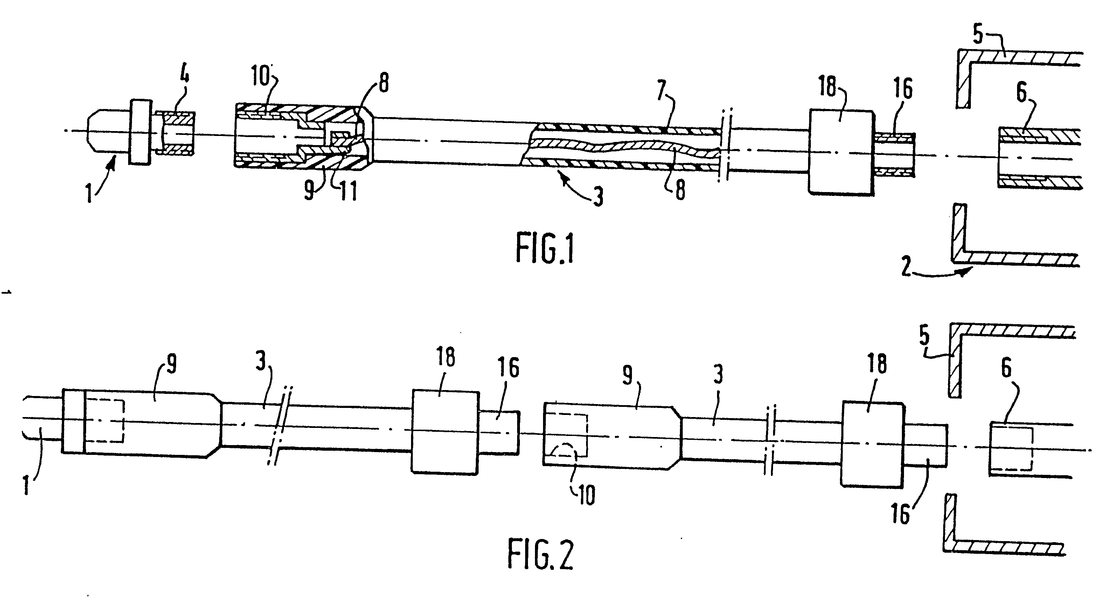

L'équipement illustré à la figure 1 est un équipement de coupage manuel à l'arc plasma, de faible puissance, constitué essentiellement d'une tête de torche 1, d'un générateur 2 et d'un câble composite souple 3 ayant une longueur par exemple de l'ordre de 6 mètres et destiné à relier la tête 1 au générateur 2.

La tête 1 est une tête de torche du type à allumage par court-circuit. Une telle torche est du type décrit par exemple dans les brevets français précités. Pour les besoins de la présente description, il suffit de noter qu'elle comprend un conduit unique de gaz, par exemple d'air comprimé, et un conducteur électrique unique, ces deux éléments étant réunis dans un corps qui se termine à son extrémité proximale par un embout métallique tubulaire 4 extérieurement fileté. Toutefois, la tête de torche 1 est rectiligne et, pour l'essentiel, de révolution autour de l'axe de l'embout 4.

Le générateur 2 est adapté pour fournir à la tête 1 un courant électrique approprié ainsi que du gaz. Pour cela, il comporte, à l'intérieur d'un carter de protection 5, un embout métallique tubulaire 6 intérieurement taraudé.

Le câble composite 3 est constitué, dans sa partie courante, d'un tuyau flexible 7 en matière isolante destiné à véhiculer le gaz et dans lequel est disposé un conducteur électrique unique 8.

A son extrémité aval (en considérant le sens de circulation du gaz), le câble 3 comporte une partie élargie 9 dans laquelle est prévu un insert métallique tubulaire taraudé 10. L'extrémité aval du conducteur 8 est fixée par sertissage sur un prolongement amont 11 de l'insert 10.

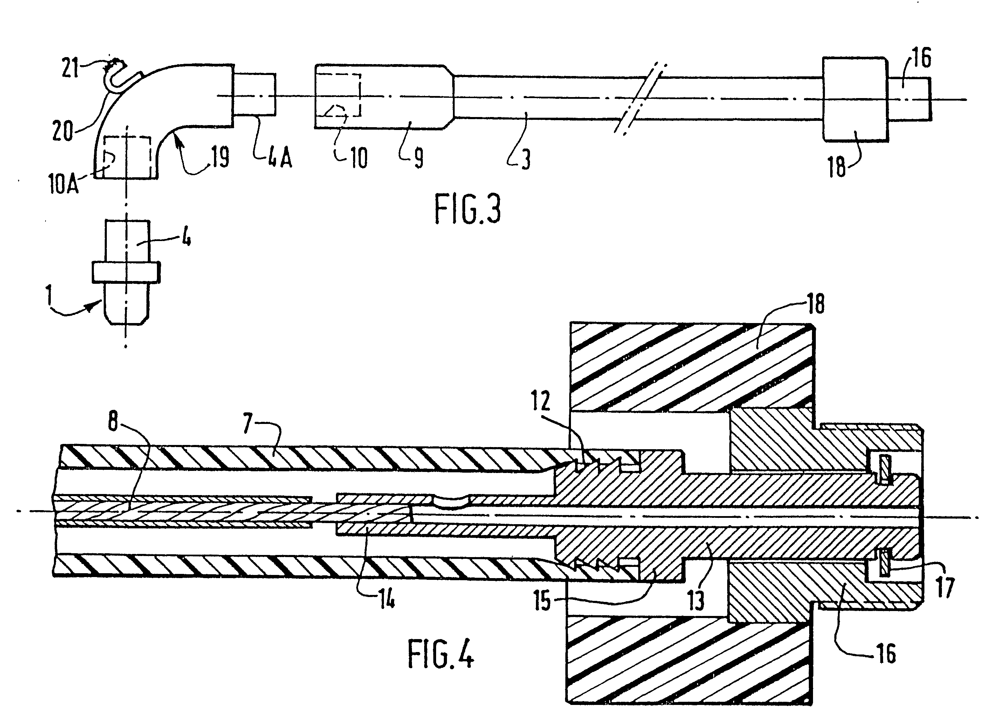

A son extrémité amont (figure 4), le tuyau est emboîté à force sur une zone cannelée 12 d'un embout métallique tubulaire 13. Ce dernier présente un prolongement aval 14 sur lequel l'extrémité amont du conducteur 8 est fixée par sertissage. En amont de la zone 12, qui est limitée par une collerette extérieure 15, l'embout 13 présente une zone cylindrique sur laquelle une vis tubulaire 16 est librement enfilée; cette dernière est retenue axialement par un circlips 17 reçu dans une gorge circulaire usinée près de l'extrémité de l'embout 13. La vis 16 est solidaire d'un volant de manoeuvre 18 en matière isolante qui se prolonge vers l'aval jusqu'au-delà de la collerette 15.

Les filetages de l'embout 4 de la tête 1 et de la vis 16 sont identiques et, de même, les taraudages de l'embout 6 du générateur et de l'insert 10 du câble 3 sont identiques.

2

On a représenté à la figure 1 l'équipement minimal. Pour l'utilisation, la tête 1 est reliée à l'extrémité aval du câble 3 par vissage de l'embout 4 dans l'insert 10, et le câble 3 est relié au générateur 2 par vissage de la vis 16 dans l'embout 6. On remarque que grâce à l'ensemble rotatif 16 - 18, ce dernier vissage n'entraîne aucune torsion du câble 3. On dispose alors d'une torche de coupage plasma droite, la partie aval élargie 9 du câble 3 servant de manche de torche et étant située dans le prolongement de la tête 1.

Si l'on a besoin d'un rayon d'action supérieur aux 6 mètres du câble 3, comme illustré à la figure 2, on interpose un second câble 3, identique au premier, soit entre ce dernier et la tête de torche, soit entre le premier câble et le générateur 2. Ceci s'effectue sans difficulté puisque les liaisons vissées 4 - 10 et 16 - 6 sont identiques. Ainsi, le câble standard 3 sert également de rallonge.

Comme représenté à la figure 3, l'équipement peut être complété par un coude tubulaire 19 destiné à être interposé entre la tête de torche 1 et le câble 3 adjacent. Ce coude, qui, dans l'exemple représenté, forme un angle de 90°, est une pièce en matière plastique pourvue de deux inserts métalliques: à l'aval, un insert femelle 10A analogue à l'insert 10 du câble 3 et présentant en particulier un taraudage identique; et à l'amont, un insert mâle 4A identique à l'embout 4 de la tête de torche. Les inserts 10A et 4A sont reliés électriquement par des moyens appropriés non représentés.

Comme représenté, le coude 19 peut porter un crochet ou autre organe de suspension 20 (ou, en variante, une pastille magnétique). Sur cet organe 20, ou en un autre emplacement du coude, on peut également prévoir un outil de grattage de la pièce à découper, destiné à nettoyer la zone d'amorçage de l'arc; cet outil peut notamment, comme illustré, être constitué par une zone rugueuse 21 du crochet 20.

On comprend qu'en intercalant le coude 19 entre la tête de torche 1 et le câble 3, par vissage de l'embout 4 dans l'insert 10A et de l'insert 4A dans l'insert 10, on passe d'une torche droite (figures 1 et 2) à une torche coudée. Dans les deux cas, la partie aval 9 du câble 3 sert de manche pour le maniement de la torche.

Ainsi, on dispose d'un équipement de coupage plasma simple, commode et d'une grande souplesse d'utilisation: à partir de la configuration de base de la figure 1 (torche droite, portée d'environ 6 mètres), on peut allonger à volonté la portée (figure 2) et/ou passer à une torche coudée (figure 3), ce grâce à la présence, entre la tête de torche et le générateur, d'une succession d'éléments pouvant tous se fixer les uns à la suite des autres, du fait de leurs filetages et taraudages tous identiques.

Bien entendu, en variante, on pourrait prévoir d'autres moyens de liaison amovibles des éléments les uns aux autres: dispositifs à encliquetage, raccords à baïonnette, etc.

## Revendications

1. Equipement manuel de travail à l'arc, de faible puissance, à allumage par court-circuit, du type comprenant une tête de torche (1), un générateur de courant électrique et de fluide (2), et un câble composite (3) adapté pour raccorder la tête de torche au générateur, ce câble composite étant constitué, dans sa partie courante, d'un tuyau flexible (7) dans lequel est disposé un conducteur électrique unique (8) et comportant à chacune de ses extrémités un embout de raccordement (10, 16) de forme cylindrique permettant le passage simultané du courant électrique et du gaz, caractérisé en ce que l'embout (16) de l'une des extrémités du câble composite (3) présente une configuration de raccordement identique à celle (4) de la tête de torche, tandis que l'embout (10) de l'autre extrémité du câble présente une configuration de raccordement identique à celle (6) du générateur.

2. Equipement suivant la revendication 1, caractérisé en ce qu'il comprend au moins deux câbles composites (3) branchés en série entre la tête de torche (1) et le générateur (2), les deux câbles ayant des embouts respectifs (10, 16) identiques.

3. Equipement suivant l'une des revendications 1 et 2, caractérisé en ce qu'il comprend en outre un coude (19) destiné à être interposé entre la tête de torche (1), qui est rectiligne, et un câble composite (3), ce coude présentant à chaque extrémité une configuration de raccordement (4A, 10A) identique à la configuration de raccordement correspondante (16, 10) du câble composite.

4. Equipement suivant l'une quelconque des revendications 1 à 3, caractérisé en ce que les configurations de raccordement (4, 4A, 6, 10, 10A, 16) forment des liaisons par vissage.

5. Equipement suivant la revendication 4, caractérisé en ce que, à une extrémité, le ou chaque câble composite (3) comporte une pièce de raccordement (16) librement rotative.

6. Equipement suivant la revendication 3, caractérisé en ce que le coude (19) porte au moins un accessoire (20, 21) tel qu'un organe de suspension (20) ou une zone abrasive (21).

7. Equipement manuel de travail à l'arc, de faible puissance, à allumage par court-circuit, du type comprenant une tête de torche (1), un générateur de courant électrique et de fluide (2), et un câble composite (3) adapté pour raccorder la tête de torche au générateur, ce câble composite étant constitué, dans sa partie courante, d'un tuyau flexible (7) dans lequel est disposé un conducteur électrique unique (8) et comportant à son extrémité adjacente à la tête de torche un embout de raccordement (10) de forme cylindrique permettant le passage simultané du courant électrique et du gaz, caractérisé en ce qu'il comprend un coude (19) adapté pour être interposé entre la tête de torche (1) et l'extrémité adjacente du câble composite (3), ce coude présentant à l'une de ses extrémités un embout (10A) ayant une configuration de raccordement identique à celle de l'embout (10) de ladite extrémité adjacente du câble (3) et à son autre extrémité un embout (4A) ayant une configuration de raccordement identique à celle (4) de la tête de torche (1).

## Patentansprüche

1. Handgerät niedriger Leistung zum Lichtbogenschweißen und -trennen mit Kurzschlußzündung, ausgerüstet mit einem Brennerkopf (1), einem Generator (2) für elektrischen Strom und für Fluid und einem Verbundkabel (3), das den Brennerkopf mit dem Generator verbindet und das in seinem Längsteil aus einem biegsamen Schlauch (7) besteht, in dem ein einziger Stromleiter (8) angeordnet ist und der an seinen beiden Enden jeweils einen zylindrischen Verbindungsansatz (10, 16) aufweist, durch den der elektrische Strom und das Gas gleichzeitig hindurchtreten können, dadurch gekennzeichnet, daß der Ansatz (16) an dem einen Ende des Verbundkabels (3) eine Form der Verbindungsmittel aufweist, die genau übereinstimmt mit der Form der Verbindungsmittel (4) an dem Brennerkopf, während der Ansatz (10) an dem anderen Ende des Kabels eine Form der Verbindungsmittel aufweist, die genau übereinstimmt mit der Form der Verbindungsmittel (6) an dem Generator.

2. Handgerät nach Anspruch 1, dadurch gekennzeichnet, daß es mindestens zwei zwischen dem Brennerkopf (1) und dem Generator (2) hintereinandergeschaltete Verbundkabel (3) umfaßt, die entsprechende, genau übereinstimmende Ansätze (10, 16) aufweisen.

3. Handgerät nach Anspruch 1 oder 2, dadurch gekennzeichnet, daß es außerdem ein Kniestück (19) aufweist, das zur Verwendung zwischen dem geraden Brennerkopf (1), und einem Verbundkabel (3) vorgesehen ist und das an jedem seiner Enden eine Form der Verbindungsmittel (4A, 10A) aufweist, die mit der entsprechenden Form der Verbindungsmittel (16, 10) des Verbundkabels genau übereinstimmt.

4. Handgerät nach einem der Ansprüche 1 bis 3, dadurch gekennzeichnet, daß die Verbindungsmittel die Form von Schraubverbindungen (4, 4A, 6, 10, 10A, 16) haben.

5. Handgerät nach Anspruch 4, dadurch gekennzeichnet, daß das oder jedes Verbundkabel (3) an einem Ende ein frei drehbares Verbindungsstück (16) aufweist.

6. Handgerät nach Anspruch 3, dadurch gekennzeichnet, daß das Kniestück (19) mindestens ein Zusatzteil (20, 21) aufweist, etwa ein Aufhängeteil (20) oder eine Abriebzone (21).

7. Handgerät niedriger Leistung zum Lichtbogenschweißen und -trennen mit Kurzschlußzündung, ausgerüstet mit einem Brennerkopf (1), einem Generator (2) für elektrischen Strom und für Fluid und einem Verbundkabel (3), das den Brennerkopf mit dem Generator verbindet und das in seinem Längsteil aus einem biegsamen Schlauch (7) besteht, in dem ein einziger Stromleiter (8) angeordnet ist und der an seinem an den Brennerkopf anstoßenden Ende einen zylindrischen Verbindungsansatz (10) aufweist, durch den der elektrische Strom und das Gas gleichzeitig hindurchtreten können, dadurch gekennzeichnet, daß es ein Kniestück (19) umfaßt, das zwischen den Brennerkopf (1) und das anstoßende Ende des Verbundkabels (3) eingesetzt werden kann und das an seinem einen Ende einen Ansatz (10A) trägt, der eine Form der Verbindungsmittel aufweist, die mit der Form der Verbindungsmittel des Ansatzes (10) des genannten anstoßenden Endes des Kabels (3) genau übereinstimmt, und an seinem anderen Ende einen Ansatz (4A), der eine Form der Verbindungsmittel aufweist, die mit der Form der Verbindungsmittel (4) des Brennerkopfs (1) genau übereinstimmt.

## Claims

1. Arc welding equipment, of low power, with ignition by short-circuiting, of the type comprising a torch head (1), a generator of electrical current and of fluid (2), and a composite cable (3) adapted to connect the torch head to the generator, this composite cable comprising, in its main portion, a flexible tube (7) in which is disposed a single electrical conductor (8) and comprising at each of its ends a connecting insert (10, 16) of cylindrical form permitting the simultaneous passage of electrical current and of gas, characterized in that the insert (16) of the one of the ends of the composite cable (3) presents a connecting configuration identical to that (4) of the torch head, whereas the insert (10) of the other end of the cable presents a connecting configuration identical to that (6) of the generator.

2. Equipment according to claim 1, characterized in that it comprises at least two composite cables (3) connected in series between the torch head (1) and the generator (2), the two cables having identical respective inserts (10, 16).

3. Equipment according to one of claims 1 and 2, characterized in that it further comprises an elbow (19) intended to be interposed between the torch head (1), which is rectilinear, and a composite cable (3), this elbow presenting at each end a connecting configuration (4a, 10a) identical to the corresponding connecting configuration (16, 10) of the composite cable.

4. Equipment according to any one of claims 1 to 3, characterized in that the connecting configurations (4, 4a, 6, 10, 10a, 16) form screw connections.

7

5. Equipment according to claim 4, characterized in that, at one end, the or each composite cable (3) comprises a freely rotatable connecting element (16).

6. Equipment according to claim 3, characterized in that the elbow (19) carries at least one accessory (20, 21) such as a suspension element (20) or an abrasive area (21).

7. Arc welding equipment, of low power, with ignition by short-circuiting, of the type comprising a torch head (1), a generator of electrical current and of fluid (2), and a composite cable (3) adapted to connect the torch head to the generator, this composite cable comprising, in its main portion, a flexible tube (7) in which is disposed a single electrical conductor (8) and comprising at its end adjacent to the torch head a connecting insert (10) of cylindrical form permitting the simultaneous passage of electrical current and of gas, characterized in that it comprises an elbow (19) adapted to be interposed between the torch head (1) and the adjacent end of the composite cable (3), this elbow presenting at the one of its ends an insert (10a) having a connecting configuration identical to that of the insert (10) of the said adjacent end of the cable (3) and at its other end an insert (4a) having a connecting configuration identical to that (4) of the torch head (1).

FIG.1

FIG.2

EP 0 220 090 B1

FIG.3

FIG.4

EP 0 220 090 B1